Europäisches Patentamt

(19) **European Patent Office**

Office européen des brevets

(11) Veröffentlichungsnummer: **0 044 490**
**B1**

(12) # EUROPÄISCHE PATENTSCHRIFT

(45) Veröffentlichungstag der Patentschrift:
10.10.84

(51) Int. Cl.³: **A 47 L 9/26, H 02 G 11/02**

(21) Anmeldenummer: **81105405.5**

(22) Anmeldetag: **10.07.81**

(54) **Elektrisches Reinigungsgerät mit einer eingebauten Kabelaufrollvorrichtung.**

(30) Priorität: **17.07.80 DE 3027119**

(43) Veröffentlichungstag der Anmeldung:
**27.01.82 Patentblatt 82/4**

(45) Bekanntmachung des Hinweises auf die Patenterteilung:
**10.10.84 Patentblatt 84/41**

(84) Benannte Vertragsstaaten:
**FR GB NL SE**

(56) Entgegenhaltungen:
**DE - A - 2 019 338**
**DE - A - 2 734 051**
**FR - A - 1 415 191**
**US - A - 3 275 760**

(73) Patentinhaber: **Siemens Aktiengesellschaft, Berlin und München Wittelsbacherplatz 2, D-8000 München 2 (DE)**

(72) Erfinder: **Appel, Wolfgang, Öttingerstrasse 15, D-8000 München (DE)**
Erfinder: **Fleischer, Wolfgang, Am Heerweg 139, D-8731 Langendorf (DE)**
Erfinder: **Roscher, Wolfgang, Tannenweg 15, D-8011 Anzing (DE)**
Erfinder: **Voigt, Frieder, Dr., Berliner Strasse 22, D-8740 Bad Neustadt/Saale (DE)**

**Beschreibung**

Die Erfindung betrifft ein elektrisches Reinigungsgerät mit einer eingebauten Kabelaufrollvorrichtung, die aus einer mit einem in Aufwikkelrichtung wirkenden Antrieb versehenen Kabeltrommel besteht, auf der das Anschlußkabel des Reinigungsgerätes aufwickelbar ist, bei welchem Gerät ferner die Antriebsenergie für das Aufwickeln des Anschlußkabels von einem elektrischen, nur in einer Drehrichtung laufenden Motor geliefert wird.

Ein solches Reinigungsgerät ist durch die FR-A-14 15 191 bekannt. Bei diesem Gerät ist zwischen dem Motor des Sauggebläses und der Kabelaufwickelvorrichtung eine Kupplung vorgesehen, durch deren Betätigung die Aufrollvorrichtung mit dem Motor gekuppelt und von diesem in Aufwickelrichtung angetrieben wird. Beim Aufwickeln des Kabels muß der Staubsauger an die versorgende Steckdose herangeführt werden, damit das Kabel von dem Motor aufgewickelt werden kann. Dabei bleibt offen, ob das nach dem Herausziehen des Steckers aus der Steckdose verbleibende Kabelende noch auf die Kabelaufrollvorrichtung aufgerollt werden kann.

Der Erfindung liegt die Aufgabe zugrunde, ein Reinigungsgerät der eingangs beschriebenen Art so auszubilden, daß sowohl das Herausziehen des Kabels wesentlich erleichtert als auch das vollständige Aufwickeln des Kabels nach der Trennung von der Steckdose gewährleistet ist.

Die Lösung der gestellten Aufgabe gelingt nach der Erfindung dadurch, daß der Kabeltrommel eine Rückholfeder zugeordnet und zwischen dieser und der Kabeltrommel eine lösbare Kupplung vorgesehen ist und daß die Rückholfeder durch den während des Reinigungsvorganges einschaltbaren Motor spannbar ist.

Eine weitere Lösungsmöglichkeit besteht darin, daß die Kabeltrommel direkt mit einer Rückholfeder gekuppelt ist und der Motor direkt oder indirekt mit einer das Anschlußkabel in Aufwickelrichtung antreibenden Rolle kuppelbar ist.

Vorteilhafte Ausgestaltungen des Anmeldungsgegenstandes sind in den Unteransprüchen beschrieben.

Anhand eines in der Zeichnung dargestellten Ausführungsbeispiels werden verschiedene Ausführungsformen des Anmeldungsgegenstandes näher beschrieben. Es zeigt

Fig. 1 einen Staubsauger, zwischen dessen Kabeltrommel und Rückholfeder eine Kupplung vorgesehen ist,

Fig. 2 einen Staubsauger mit einer der Kabeltrommel zugeordneten Rückholfeder und einer durch einen Motor spannbaren Ausrollfeder,

Fig. 3 einen Staubsauger mit einem das Anschlußkabel von der Kabeltrommel abziehenden Motor.

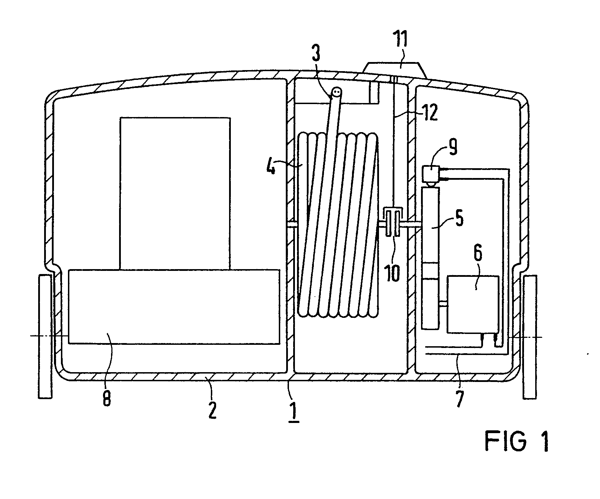

Der in Fig. 1 in einem schematischen Querschnitt dargestellte Staubsauger 1 besitzt ein Gehäuse 2, in dem eine das Anschlußkabel 3 aufnehmende Kabeltrommel 4 eingebaut ist. In dem Gehäuse 2 ist ferner eine Rückholfeder 5 angeordnet, die durch einen Motor 6 gespannt wird. Der Motor 6 ist über eine Zuleitung 7 beispielsweise zum Motor des Gebläseaggregates 8 parallelgeschaltet. Sobald der Staubsauger durch Einschalten des Gebläseaggregates 8 in Betrieb genommen wird, läuft auch der Motor 6 und zieht die Rückholfeder auf. Sobald die Rückholfeder 5 ganz gespannt ist, wird der Motor 6 durch einen Endschalter 9 abgeschaltet. Zwischen der Rückholfeder 5 und der Kabeltrommel 4 ist eine lösbare Kupplung 10 angeordnet. Am Gehäuse 2 des Staubsaugers ist ein Betätigungsknopf 11 angeordnet, der beim Niederdrücken über ein Gestänge 12 die Kupplung 10 löst. Hierdurch ist die Kabeltrommel 4 von der Rückholfeder 5 entkuppelt, so daß das Anschlußkabel 3 ohne Kraftaufwand von der Kabeltrommel 4 abgezogen werden kann. Während des Saugvorganges wird die Rückholfeder 5 wieder durch den Motor 6 gespannt und vermag somit wieder die Kabeltrommel 4 nach Beendigung des Saugvorganges zum Aufwickeln des Anschlußkabels anzutreiben.

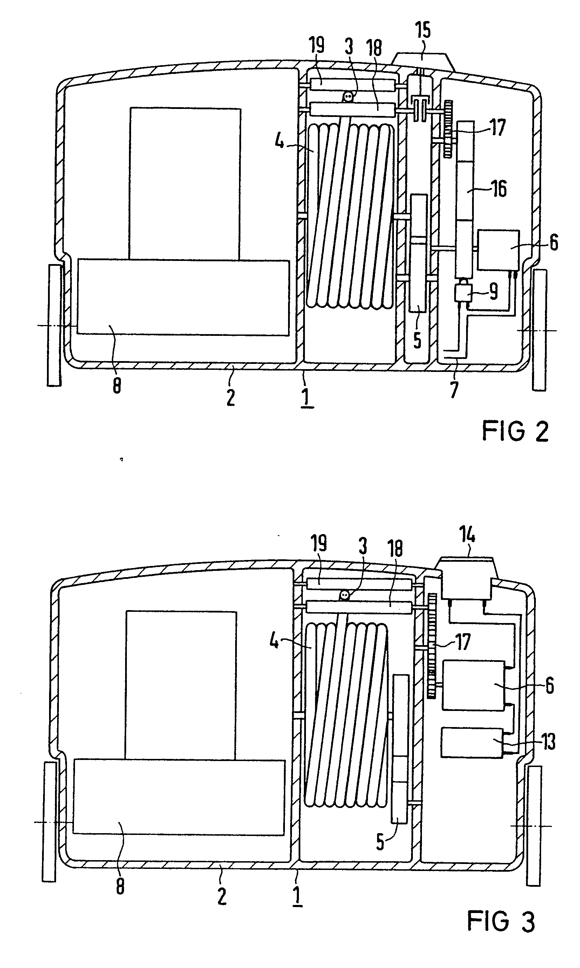

Bei den in den Fig. 2 und 3 dargestellten Staubsaugern wird das Anschlußkabel 3 durch Betätigen eines Tasters 15 selbsttätig von der Kabeltrommel 4 abgewickelt. Hierzu ist bei dem in Fig. 2 dargestellten Staubsauger eine Ausrollfeder 16 vorgesehen, die durch den Motor 6 spannbar ist. Die Ausrollfeder 16 ist stärker dimensioniert als die Rückholfeder 5, so daß die Ausrollfeder die Rückholfeder beim Abziehen des Anschlußkabels 3 von der Kabeltrommel 4 zu spannen vermag. Durch Betätigen des Tasters 15 wird die Ausrollfeder 16 über ein Getriebe 17 mit einer Rolle 18 gekoppelt, an die das Anschlußkabel 3 durch eine Andruckrolle 19 angedrückt wird. Durch die Ausrollfeder 16 wird die Rolle 18 in Drehung versetzt und das Anschlußkabel 3 somit von der Kabeltrommel 4 abgezogen. Über die Zuleitung 7 ist der Motor 6 zum Motor des Gebläseaggregates 8 parallelgeschaltet. Während des Betriebes des Staubsaugers zieht somit der Motor 6 die Ausrollfeder 16 wieder auf. Sobald die Ausrollfeder 16 voll gespannt ist, wird der Motor 6 durch den Endschalter 9 abgeschaltet.

Der in Fig. 3 dargestellte Staubsauger unterscheidet sich von dem in Fig. 2 dargestellten Staubsauger dadurch, daß der aus der Batterie 13 gespeiste Motor 6 die Rolle 18 über das Getriebe 17 direkt antreibt. Soll der Staubsauger in Betrieb genommen werden, so wird der Tastschalter 14 betätigt, wodurch der Motor 6 eingeschaltet und das Anschlußkabel 3 von der Kabeltrommel 4 abgezogen wird. Beim Abziehen des Anschlußkabels 3 wird gleichzeitig die Rückholfeder 5 gespannt, so daß nach Abschluß der Reinigungsarbeit das Anschlußkabel 3 durch die Rückholfeder 5 wieder auf die Kabeltrommel 4 aufgewickelt werden kann.

## Patentansprüche

1. Elektrisches Reinigungsgerät mit einer eingebauten Kabelaufrollvorrichtung, die aus einer mit einem in Aufwickelrichtung wirkenden Antrieb versehenen Kabeltrommel (4) besteht, auf der das Anschlußkabel (3) des Reinigungsgerätes aufwickelbar ist, bei welchem Gerät ferner die Antriebsenergie für das Aufwickeln des Anschlußkabels von einem elektrischen, nur in einer Drehrichtung laufenden Motor (6) geliefert wird, dadurch gekennzeichnet, daß der Kabeltrommel (4) eine Rückholfeder (5) zugeordnet und zwischen dieser und der Kabeltrommel (4) eine lösbare Kupplung (10) vorgesehen ist und daß die Rückholfeder (5) durch den während des Reinigungsvorganges einschaltbaren Motor (6) spannbar ist.

2. Elektrisches Reinigungsgerät mit einer eingebauten Kabelaufrollvorrichtung, die aus einer mit einem in Aufwickelrichtung wirkenden Antrieb versehenen Kabeltrommel (4) besteht, auf der das Anschlußkabel (3) des Reinigungsgerätes aufwickelbar ist, bei welchem Gerät ferner die Antriebsenergie für das Aufwickeln des Anschlußkabels von einem elektrischen, nur in einer Drehrichtung laufenden Motor (6) geliefert wird, dadurch gekennzeichnet, daß die Kabeltrommel (4) direkt mit einer Rückholfeder (5) gekuppelt ist und der Motor (6) direkt oder indirekt mit einer das Anschlußkabel (3) in Abwickelrichtung antreibenden Rolle (18) kuppelbar ist.

3. Reinigungsgerät nach Anspruch 2, dadurch gekennzeichnet, daß eine durch den Motor (6) während des Reinigungsvorganges spannbare, gegenüber der Rückholfeder (6) stärker ausgelegte Ausrollfeder (16) vorgesehen und mit der Rolle (18) kuppelbar ist.

4. Reinigungsgerät nach Anspruch 2, dadurch gekennzeichnet, daß der Motor (6) aus einer Zusatzspannungsquelle (13) gespeist und mit der Rolle (18) kuppelbar ist.

## Claims

1. An electric cleaning device with an inbuilt cable rewind device which consists of a cable drum (4), provided with a drive operating in the winding direction, and on which the connection cable (3) of the cleaning device can be rewound, in which device, moreover, the driving energy for winding the connection cable is supplied by an electric motor (6) which only runs in the direction of rotation, characterised in that the cable drum (4) is assigned a return spring (5) and between the latter and the cable drum (4) a releasable coupling (10) is arranged; and that the return spring (5) can be tightened by the motor (6) which can be switched on during the cleaning procedure.

2. An electric cleaning device having an inbuilt cable rewind device which consists of a cable drum (4) provided with a drive operating in the winding direction and on which the connection cable (3) of the cleaning device can be rewound, in which device, moreover, the driving energy for winding the connection cable is supplied by an electric motor (6) which only runs in the direction of rotation, characterised in that the cable drum (4) is directly coupled to a return spring (5) and the motor (6) can be directly or indirectly coupled to a roller (18) which drives the connection cable (3) in the winding direction.

3. A cleaning device according to claim 2, characterised in that there is provided a run-out spring (16) which can be tightened by the motor (6) during the cleaning procedure and is designed to be stronger with respect to the return spring (6), and which can be coupled to the roller (18).

4. A cleaning device according to claim 2, characterised in that the motor (6) is fed from a supplementary voltage source (13) and can be coupled to the roller (18).

## Revendications

1. Appareil électrique de nettoyage comportant un dispositif incorporé d'enroulement de câble, qui est constitué par un tambour de câble (4) équipé d'un système d'entraînement agissant dans le sens de l'enroulement et sur lequel le câble de raccordement (3) de l'appareil de nettoyage peut être enroulé, et dans lequel en outre l'énergie d'entraînement utilisée pour l'enroulement du câble de raccordement est fournie par un moteur électrique (6) tournant uniquement dans un sens de rotation, caractérisé par le fait qu'un ressort de rappel (5) est associé au tambour de câble (4), qu'il est prévu un accouplement détachable (10) entre ce ressort et le tambour à câble (4) et que le ressort de rappel (5) peut être armé par le moteur (6) pouvant être branché pendant l'opération de nettoyage.

2. Appareil électrique de nettoyage comportant un dispositif incorporé d'enroulement de câble, qui est constitué par un tambour de câble (4) équipé d'un système d'entraînement agissant dans le sens de l'enroulement, et sur lequel le câble de raccordement (3) de l'appareil de nettoyage peut être enroulé, et dans lequel en outre l'énergie d'entraînement utilisée pour l'enroulement du câble de raccordement est fournie par un moteur électrique (6) tournant uniquement dans un sens de rotation, caractérisé par le fait que le tambour de câble (4) est accouplé directement à un ressort de rappel (5) et que le moteur (6) peut être accouplé directement ou indirectement à un rouleau (18) entraînant le câble de raccordement (3) dans le sens du dévidage.

3. Appareil de nettoyage suivant la revendication 2, caractérisé par le fait qu'il est prévu un ressort de déroulement (16) qui doit être armé par le moteur (6) pendant l'opération de nettoyage et dont la force est supérieure au ressort de rappel (6), et que ce ressort peut être accouplé au rouleau (18).

4. Appareil suivant la revendication 2, caractérisé par le fait que le moteur (6) est alimenté à partir d'une source de tension auxiliaire (13) et peut être accouplée aux rouleaux (18).

FIG 1

FIG 2

FIG 3